# FASCICULE DE BREVET EUROPEEN

(11) **EP 2 878 651 B1**
(45) Date de publication et mention de la délivrance du brevet: **26.07.2017**
(21) Numéro de dépôt: 14306682.7
(22) Date de dépôt: 23.10.2014
(51) Int. Cl.: B01J 27/19, B01J 35/00, C10G 65/12, C10G 69/04, C10G 45/08, C10G 65/04, B01J 37/02

(54) **Procédé d'hydrotraitement de distillat sous vide mettant en oeuvre un enchainement de catalyseurs**
Wasserstoffbehandlungsverfahren eines Vakuumdestillats durch Verwendung einer Sequenz von Katalysatoren
Method for hydrotreating vacuum distillate using a sequence of catalysts

(30) Priorité: 28.11.2013 FR 1361800
(43) Date de publication de la demande: 03.06.2015
(73) Titulaire: IFP Énergies nouvelles, 92852 Rueil-Malmaison Cedex (FR)
(72) Inventeur: Roy-Auberger, Magalie, 38300 Nivolas-Vermelle (FR); Guillon, Emmanuelle, 69390 Vourles (FR); Grezaud, Aline, 69008 Lyon (FR)

(56) Documents cités:
- WO-A1-2008/045550
- WO-A2-2007/084438
- US-A- 4 574 120
- US-A1- 2005 247 602

## Description

La présente invention se rapporte au domaine des procédés d'hydrocraquage et de craquage catalytique et plus particulièrement à un prétraitement de tels procédés par hydrotraitement d'une charge de type distillat sous vide par mise en oeuvre d'un enchaînement de catalyseurs. L'objectif du procédé est la production de distillat sous vide désulfuré et désazoté. Le procédé d'hydrotraitement selon l'invention est particulièrement adapté pour l'hydrotraitement de charges comprenant des teneurs élevées en azote.

Le procédé d'hydrocraquage permet de convertir des fractions pétrolières, en particulier les distillats sous vide (DSV) en produits plus légers et plus valorisables (essence, distillats moyens). Les distillats sous vide contiennent des teneurs variables de contaminants divers (composés soufrés, azotés en particuliers) : il est donc nécessaire de réaliser une étape d'hydrotraitement de la charge avant l'étape d'hydrocraquage proprement dite qui va permettre de rompre des liaisons C-C et de produire les coupes légères visées. La même problématique existe pour une charge destinée à un procédé de craquage catalytique.

L'objectif de l'étape d'hydrotraitement, souvent appelé prétraitement hydrocraquage, est de purifier la charge sans trop modifier le poids moléculaire moyen de celle-ci. Il s'agit en particulier d'éliminer les composés soufrés ou azotés contenus dans celles-ci. Les principales réactions visées sont l'hydrodésulfuration, l'hydrodéazotation et l'hydrogénation des aromatiques. La composition et l'utilisation des catalyseurs d'hydrotraitement sont particulièrement bien décrites dans l'article de B. S Clausen, H. T. Topsøe, et F. E. Massoth, issu de l'ouvrage Catalysis Science and Technology, volume 11 (1996), Springer-Verlag. Les catalyseurs d'hydrotraitement possèdent généralement des fonctions hydrodésulfurantes et hydrogénantes à base de sulfure de métaux des groupes VIB et VIII.

L'ajout d'un composé organique sur les catalyseurs d'hydrotraitement pour améliorer leur activité est maintenant bien connu de l'homme du métier. De nombreux brevets protègent l'utilisation de différentes gammes de composés organiques, tels que les mono, di- ou polyalcools éventuellement éthérifiés (WO96/41848, WO01/76741, US4012340, US3954673, EP601722). Des catalyseurs modifiés avec des monoesters en C2-C14 sont décrits dans les demandes de brevet EP466568 et EP1046424.

D'autres brevets montrent qu'un enchaînement spécifique de catalyseurs dans le même réacteur peut être avantageux.

Ainsi, la demande de brevet US2011/0079542 décrit que le remplacement d'une partie d'un catalyseur d'HDS de référence en tête de lit par un catalyseur d'activité plus basse ne modifie pas les performances du chargement global par rapport à 100% de catalyseur de référence, car sur la première portion du lit catalytique, la réaction se fait sur des espèces soufrés non réfractaires et ne nécessite pas un catalyseur performant.

Le brevet EP 0651041 montre l'intérêt d'enchainer des lits de catalyseurs avec des formes de particules différentes. Le document US2005/247602 décrit un procédé d'hydrotraitement d'une charge hydrocarbonée de type diesel utilisant un catalyseur massique à base de métaux du groupe VIB, VII et Nb sous forme oxyde. Ce document décrit que les catalyseurs massiques contenant du Nb sont plus actifs en hydrotraitement que des catalyseu rs supportés conventionnels. Le document US45741 20 décrit un procédé d'hydrotraitement d'une charge hydrocarbonée utilisant un catalyseur comprenant une phase active d'un métal du groupe VIB et du groupe VIII, supporté sur un support amorphe de type alumine ou silice, ledit catalyseur étant préparé par un séchage et une additivation à lacétonitrile. Ce document décrit qu'un tel catalyseur séché additivé améliore l'activité catalytique. La présente invention concerne un procédé d'hydrotraitement d'une charge de type distillat sous vide par mise en oeuvre d'un enchaînement spécifique d'au moins deux types de catalyseurs différents permettant d'accroitre l'activité globale et la stabilité globale du procédé d'hydrotraitement par rapport à un procédé d'hydrotraitement utilisant en même quantité et dans les mêmes conditions opératoires qu'un seul de ces deux types de catalyseurs.

On entend par hydrotraitement des réactions englobant notamment l'hydrodésulfuration (HDS), l'hydrodéazotation (HDN) et l'hydrogénation des aromatiques (HDA).

Selon le procédé de l'invention, la charge est d'abord mise en contact avec un premier type de catalyseur comportant du phosphore et une phase active sous sa forme oxyde, c'est-à-dire que ledit premier catalyseur est préparé selon un procédé comprenant au moins une étape de calcination après l'imprégnation des sels métalliques. On appellera ce premier type de catalyseur "catalyseur sous forme oxyde" ou "catalyseur calciné".

La charge est ensuite mise en contact avec un deuxième type de catalyseur lequel a été préparé par introduction de phosphore, de la phase active et d'un composé organique contenant de l'oxygène et/ou de l'azote suivie d'une étape de séchage, sans calcination ultérieure. Il est à noter que ce deuxième type de catalyseur ne subit pas de calcination, la phase active ne se trouve alors pas sous sa forme oxyde. On appellera ce deuxième type de catalyseur "catalyseur additivé".

Plus particulièrement, la présente invention concerne un procédé d'hydrotraitement d'une charge hydrocarbonée contenant des composés azotés à une teneur supérieure à 250 ppm poids, de préférence supérieure à 500 ppm, et ayant une température moyenne pondérée supérieure à 380°C, comportant les étapes suivantes :
a) on met en contact en présence d'hydrogène ladite charge hydrocarbonée avec au moins un premier catalyseur comprenant un support amorphe à base d'alumine, du phosphore, et une phase active formée d'au moins un métal du groupe VIB sous forme oxyde et d'au moins un métal du groupe VIII sous forme oxyde, ledit premier catalyseur étant préparé selon un procédé comprenant au moins une étape de calcination,
b) on met en contact en présence d'hydrogène l'effluent obtenu à l'étape a) avec au moins un deuxième catalyseur comprenant un support amorphe à base d'alumine, du phosphore, une phase active formée d'au moins un métal du groupe VIB et d'au moins un métal du groupe VIII, et au moins un composé organique contenant de l'oxygène et/ou de l'azote, ledit deuxième catalyseur étant préparé selon un procédé comprenant les étapes suivantes :
   i) on met en contact au moins un composant d'un métal du groupe VIB, au moins un composant d'un métal du groupe VIII, du phosphore et au moins un composé organique contenant de l'oxygène et/ou de l'azote avec le support, de manière à obtenir un précurseur de catalyseur,
   ii) on sèche ledit précurseur de catalyseur issu de l'étape i) à une température inférieure à 200°C, sans le calciner utérieurement,
de manière à obtenir un effluent hydrotraité.

On a pu constater que bien que les catalyseurs additivés d'un composé organique aient généralement un pouvoir d'hydrotraitement amélioré par rapport aux catalyseurs non additivés, ces catalyseurs sont plus facilement inhibés par des molécules azotées, et notamment par des molécules azotées basiques contenues dans la charge, que les catalyseurs non additivés. Cette inhibition a comme conséquence une baisse d'activité et de stabilité du catalyseur additivé avec le temps et donc une diminution de leur pouvoir d'hydrotraitement.

La demanderesse a développé un procédé d'hydrotraitement d'une charge de type distillat sous vide comprenant un enchaînement de catalyseurs permettant d'effectuer dans un premier temps un hydrotraitement sur un catalyseur sous sa forme oxyde (catalyseur calciné), lequel présente une bonne activité en hydrodésulfuration et en hydrodéazotation. Ce premier type de catalyseur est notamment moins inhibé par les molécules azotés basiques réfractaires et donc plus actif en hydrodéazotation qu'un catalyseur additivé. Ceci permet d'effectuer une hydrodéazotation poussée dans la première étape du procédé selon l'invention et donc de soulager le catalyseur additivé de la deuxième étape qui est mis en contact avec l'effluent sortant de cette première étape. L'hydrotraitement est ensuite poursuivi par la mise en contact de la charge dépourvue d'une grande partie de ses molécules azotées et d'une partie de ses molécules soufrées avec un catalyseur additivé particulièrement actif en HDN et HDS, permettant ainsi de finaliser l'hydrotraitement. Grâce au fait que la charge est mise en contact avec un catalyseur sous forme oxyde avant la mise en contact avec un catalyseur additivé, le catalyseur additivé est moins inhibé par les molécules azotées et donc plus actif et stable avec le temps. L'enchaînement spécifique permet ainsi de protéger le catalyseur additivé très actif en HDS/HDN par un catalyseur sous forme oxyde très actif en HDN, ce qui a comme conséquence une augmentation de l'activité globale et de la stabilité globale de l'enchaînement catalytique par rapport à un système catalytique ne contenant que des catalyseurs additivés. Ainsi, l'activité globale est augmentée car la vitesse volumique horaire (le volume de charge pouvant être traité par temps) peut être augmentée ou, alternativement, on peut utiliser moins de catalyseur pour traiter le même volume de charge. De plus, grâce à l'augmentation de l'activité, la température nécessaire pour atteindre une teneur en azote souhaitée peut être baissée. De même, la stabilité globale est augmentée, car la durée de cycle est prolongée.

Le procédé d'hydrotraitement selon l'invention est particulièrement adapté pour l'hydrotraitement de charges comprenant des teneurs élevées en azote organique, telles que des charges issues du craquage catalytique, du coker ou de la viscoréduction.

Le procédé selon la présente invention permet de produire une coupe hydrocarbonée hydrotraitée, c'est-à-dire à la fois débarrassée des éventuels composés sulfurés et azotés. Les teneurs en composés azotés après l'hydrotraitement sont généralement inférieures ou égales à 300 ppm en azote, de préférence inférieure à 200ppm, de manière très préférée inférieure à 100ppm. Par ppm en azote (ou en soufre) on entend pour toute la suite du texte des ppm en poids rapportés à l'azote élémentaire (ou soufre élémentaire), quelle que soit la ou les molécules organiques dans lesquelles l'azote (ou le soufre) est engagé. De préférence, selon le procédé selon l'invention la conversion en hydrodésulfuration est supérieure à 95 %, de préférence supérieure à 98 %. De préférence, selon le procédé selon l'invention la conversion en hydrodéazotation est supérieure à 90 %, de préférence supérieure à 95 %.

Selon une variante, pour le catalyseur de l'étape a) ou b), le métal du groupe VIB est choisi parmi le molybdène, le tungstène et le mélange de ces deux éléments, et le métal du groupe VIII est choisi parmi le cobalt, le nickel et le mélange de ces deux éléments.

Selon une variante, pour le catalyseur de l'étape a) ou b), la teneur en métal du groupe VIB est comprise entre 5 et 40% poids d'oxyde de métal du groupe VIB par rapport au poids total du catalyseur, la teneur en métal du groupe VIII est comprise entre 1 et 10% poids d'oxyde de métal du groupe VIII par rapport au poids total du catalyseur et la teneur en phosphore est comprise entre 0,1 et 10 % poids de P₂O₅ par rapport au poids total du catalyseur.

Selon une variante, le catalyseur de l'étape a) ou b) contient en outre au moins un dopant choisi parmi le bore et le fluor et un mélange de bore et de fluor.

Selon une variante, le composé organique est l'un ou plusieurs choisis parmi un acide carboxylique, un alcool, un aldéhyde, un ester, une amine, un acide carboxylique aminé, un alcool aminé, un nitrile ou un amide, de préférence il est l'un ou plusieurs choisis parmi l'éthylène glycol, le glycérol, le polyéthylène glycol (avec un poids moléculaire de 200 à 1500), l'acétophénone, le 2,4-pentanedione, le pentanole, l'acide acétique, l'acide maléique, l'acide oxalique, l'acide tartrique, l'acide formique, l'acide citrique, et le succinate de dialkyle C1-C4, de manière particulièrement préférée il est comprend au moins la combinaison du succinate de dialkyle C1-C4 et de l'acide acétique. Selon une autre variante particulièrement préférée, le composé organique comprend au moins l'acide citrique.

Selon une variante, le catalyseur de l'étape a) ou b) a en outre subi une étape de sulfuration. Selon une variante, la teneur en azote basique dans la charge est supérieure ou égale à 60 ppm.

Selon une variante, chacune des étapes a) et b) est effectuée à une température comprise entre 200 et 450°C, à une pression comprise entre 0,5 et 30 MPa, à une vitesse volumique horaire comprise entre 0,1 et 20 h⁻¹ et avec un rapport hydrogène/charge exprimé en volume d'hydrogène, mesuré dans les conditions normales de température et pression, par volume de charge liquide est avantageusement compris entre 50 I/I à 2000 I/I.

Selon une variante, l'étape a) est effectuée dans une première zone contenant le premier catalyseur qui occupe un volume V1, et l'étape b) est effectuée dans une deuxième zone contenant le deuxième catalyseur qui occupe un volume V2, la répartition des volumes V1/V2 étant comprise entre 10 % vol / 90% vol et 50% vol / 50% vol respectivement de la première et deuxième zone.

Selon une variante, l'étape i) de l'étape b) comprend les étapes successives suivantes:
i') on imprègne un support amorphe à base d'alumine par au moins une solution contenant au moins un métal du groupe VIB, au moins un métal du groupe VIII et ledit phosphore pour obtenir un support imprégné,
i") on sèche le support imprégné obtenu à l'étape i') à une température inférieure à 180°C sans calcination ultérieure pour obtenir unsupport imprégné séché,
i"') on imprègne le support imprégné séché obtenu à l'étape i") par une solution d'imprégnation comprenant au moins un composé organique contenant de l'oxygène et/ou de l'azote pour obtenir un précurseur catalytique imprégné,
i"") on laisse maturer le précurseur catalytique imprégné obtenu à l'étape i"') pour obtenir ledit précurseur de catalyseur.

Selon une variante, l'effluent obtenu à l'étape a) est soumis à une étape de séparation permettant de séparer une fraction lourde et une fraction légère contenant le H₂S et le NH₃ formés lors de l'étape a), ladite fraction lourde étant ensuite introduite dans l'étape b).

L'invention concerne également un procédé d'hydrocraquage mettant en oeuvre le procédé d'hydrotraitement selon l'invention, dans lequel on met en contact en présence d'hydrogène et dans les conditions opératoires d'hydrocraquage ledit effluent hydrotraité avec au moins un catalyseur d'hydrocraquage de manière à obtenir un effluent hydrocraqué.

L'invention concerne également un procédé de craquage catalytique en lit fluidisé mettant en oeuvre le procédé d'hydrotraitement selon l'invention, dans lequel on met en contact dans les conditions opératoires de craquage catalytique ledit effluent hydrotraité avec au moins un catalyseur de craquage catalytique de manière à obtenir un effluent craqué.

### Description détaillée

### La charge et les conditions opératoires

La charge hydrocarbonée traitée selon le procédé d'hydrotraitement de l'invention présente une température moyenne pondérée (TMP) supérieure à 380°C. La TMP est définie à partir de la température à laquelle distillent 5%, 50% et 70% du volume de la charge selon la formule suivante : TMP = (T 5% + 2 x T 50% + 4 x T 70%)/ 7. La TMP est calculée à partir de valeurs de distillation simulée. La TMP de la charge est supérieure à 380°C et de préférence inférieur 600°C, et de manière plus préférée inférieure à 580°C. La charge hydrocarbonée traitée a généralement un intervalle de distillation compris entre 250°C et 600°C, de préférence entre 300 et 580°C.

Dans la suite du texte, nous appellerons conventionnellement cette charge distillat sous vide, mais cette désignation n'a aucun caractère restrictif. Toute charge hydrocarbonée contenant du soufre et des composés azotés inhibiteurs de l'hydrotraitement, et une TMP similaire à celle d'une coupe distillat sous vide peut être concernée par le procédé objet de la présente invention. La charge hydrocarbonée peut être de nature chimique quelconque, c'est à dire posséder une répartition quelconque entre les différentes familles chimiques notamment les paraffines, oléfines, naphtènes et aromatiques.

Ladite charge hydrocarbonée comprend des molécules organiques azotées et/ou soufrées. Les molécules organiques azotées sont soit basiques, comme les amines, les anilines, les pyridines, les acridines, les quinoléines et leurs dérivés, soit neutres comme par exemple les pyrroles, les indoles, les carbazoles et leurs dérivés. Ce sont notamment les molécules azotés basiques qui inhibent les catalyseurs d'hydrotraitement, et notamment les catalyseurs additivés.

La teneur en azote est supérieure ou égale à 250 ppm, de préférence elle est comprise entre 500 et 10000 ppm poids, de manière plus préférée entre 700 et 4000 ppm poids et de manière encore plus préférée entre 1000 et 4000 ppm. La teneur en azote basique présente au moins un quart de la teneur en azote globale (azote). La teneur en azote basique est généralement supérieure ou égale à 60 ppm, de manière plus préférée entre 175 et 1000 ppm poids et de manière encore plus préférée entre 250 et 1000ppm.

La teneur en soufre dans la charge est généralement comprise entre 0,01 et 5% poids, de manière préférée comprise entre 0,2 et 4% poids et de manière encore plus préférée entre 0,5 et 3 % poids.

Ladite charge hydrocarbonée peut éventuellement avantageusement contenir des métaux, en particulier du nickel et du vanadium. La teneur cumulée en nickel et vanadium de ladite charge hydrocarbonée, traitée selon le procédé d'hydrocraquage selon l'invention, est de préférence inférieure à 1 ppm poids.

La teneur en asphaltènes de ladite charge hydrocarbonée est généralement inférieure à 3000 ppm, de manière préférée inférieure à 1000 ppm, de manière encore plus préférée inférieure à 200 ppm.

La charge traitée contient généralement des résines, de préférence la teneur en résines est supérieure à 1% pds, de manière préférée supérieure à 5% pds. La mesure de la teneur en résines s'effectue selon la norme ASTM D 2007-11.

Ladite charge hydrocarbonée est avantageusement choisie parmi les LCO ou HCO (Light Cycle Oil ou Heavy Cycle Oil selon la terminologie anglo-saxonne (gazoles légers ou lourds issus d'une unité de craquage catalytique)), les distillats sous vide par exemple gasoils issus de la distillation directe du brut ou d'unités de conversion telles que le craquage catalytique, le coker ou la viscoréduction, les charges provenant d'unités d'extraction d'aromatiques, des bases d'huile lubrifiante ou issues du déparaffinage au solvant des bases d'huile lubrifiante, les distillats provenant de procédés de désulfuration ou d'hydroconversion en lit fixe ou en lit bouillonnant de résidus atmosphériques et/ou de résidus sous vide et/ou d'huiles désasphaltées, ou encore la charge peut être une huile désasphaltée ou comprendre des huiles végétales ou bien encore provenir de la conversion de charges issues de la biomasse. Ladite charge hydrocarbonée traitée selon le procédé d'hydrocraquage de l'invention peut encore être un mélange desdites charges précédemment citées.

Le procédé selon l'invention peut être effectué en un, deux ou plusieurs réacteurs. Il est généralement effectué en lit fixe.

Lorsque le procédé selon l'invention est effectué en deux réacteurs, l'étape a) peut être effectuée dans le premier réacteur traversé par la charge, puis l'étape b) peut être effectuée dans le deuxième réacteur placé en aval du premier réacteur. Optionnellement, l'effluent de l'étape a) sortant du premier réacteur peut être soumis à une étape de séparation permettant de séparer une fraction légère contenant notamment le H₂S et le NH₃ formés lors de l'hydrotraitement dans l'étape a) d'une fraction lourde contenant les hydrocarbures partiellement hydrotraités. La fraction lourde obtenue après l'étape de séparation est ensuite introduite dans le deuxième réacteur permettant d'effectuer l'étape b) du procédé selon l'invention. L'étape de séparation peut être effectuée par distillation, séparation flash ou toute autre méthode connue par l'homme du métier.

Lorsque le procédé est effectué dans un seul réacteur, l'étape a) est effectuée dans une première zone contenant le premier catalyseur qui occupe un volume V1, et l'étape b) est effectuée dans une deuxième zone contenant le deuxième catalyseur qui occupe un volume V2. Le pourcentage volumique de la première zone contenant le catalyseur sous forme oxyde de l'étape a) par rapport au volume total des zones est de préférence au moins de 10 % vol. Le pourcentage volumique de la première zone contenant le catalyseur sous forme oxyde de l'étape a) est ajusté de manière à maximiser la conversion des composés azotés inhibiteurs, dit basique. La répartition des volumes V1/V2 est de préférence comprise entre 10 % vol / 90% vol et 50% vol / 50% vol respectivement de la première et deuxième zone.

Les métaux du groupe VIB ou du groupe VIII utilisés pour former la phase active des catalyseurs de l'étape a) ou b) peuvent être identiques ou différents dans chacune des étapes a) ou b).

Les conditions opératoires utilisées dans les étapes a) ou b) du procédé d'hydrotraitement selon l'invention sont généralement les suivantes : la température est avantageusement comprise entre 200 et 450°C, et de préférence entre 300 et 400°C, la pression est avantageusement comprise entre 0,5 et 30 MPa, et de préférence entre 5 et 20 MPa, la vitesse volumique horaire (définie comme le rapport du débit volumique de charge sur le volume du catalyseur par heure) est avantageusement comprise entre 0,1 et 20 h⁻¹ et de préférence entre 0,2 et 5 h⁻¹, et le rapport hydrogène/charge exprimé en volume d'hydrogène, mesuré dans les conditions normales de température et pression, par volume de charge liquide est avantageusement compris entre 50 I/I à 2000 I/I. Les conditions opératoires peuvent être identiques ou différentes dans les étapes a) et b). De préférence elles sont identiques.

### Etape a) : Hydrotraitement avec un catalyseur sous forme oxyde

Selon l'étape a) du procédé selon l'invention, on met en contact en présence d'hydrogène ladite charge hydrocarbonée avec au moins un premier catalyseur comprenant un support amorphe à base d'alumine, du phosphore, et une phase active formée d'au moins un métal du groupe VIB sous forme oxyde et d'au moins un métal du groupe VIII sous forme oxyde, ledit premier catalyseur étant préparé selon un procédé comprenant au moins une étape de calcination.

Le catalyseur utilisé dans l'étape a) selon l'invention est composé d'un support amorphe à base d'alumine, de phosphore, et d'une phase active formée d'au moins un métal du groupe VIB sous forme oxyde et d'au moins un métal du groupe VIII sous forme oxyde.

De manière générale, la teneur totale en métal du groupe VIB et en métal du groupe VIII, est supérieure à 6 % poids, et de préférence entre 10 et 50 % poids oxydes de métaux des groupes VIB et VIII par rapport au poids total du catalyseur.

La teneur en métal du groupe VIB est comprise entre 5 et 40% poids, de préférence entre 8 et 35 % poids, et de manière plus préférée entre 10 et 30 % poids d'oxyde de métal(ux) du groupe VIB par rapport au poids total du catalyseur.

La teneur en métal du groupe VIII est comprise entre 1 et 10% poids, de préférence entre 1,5 et 9% poids, et de manière plus préférée entre 2 et 8% poids d'oxyde de métal du groupe VIII par rapport au poids total du catalyseur.

Le métal du groupe VIB présent dans la phase active du catalyseur mis en oeuvre dans le procédé d'hydrotraitement selon l'invention est préférentiellement choisi parmi le molybdène, le tungstène et le mélange de ces deux éléments, et très préférentiellement, le métal du groupe VIB est le molybdène.

Le métal du groupe VIII présent dans la phase active du catalyseur mis en oeuvre dans le procédé d'hydrotraitement selon l'invention est préférentiellement choisi parmi le cobalt, le nickel et le mélange de ces deux éléments. De manière très préférée, le métal du groupe VIII est le nickel.

De préférence, la phase active du catalyseur utilisé dans l'étape a) est choisie dans le groupe formé par la combinaison des éléments nickel-molybdène, nickel-cobalt-molybdène, nickel-tungstène ou nickel-molybdène-tungstène. De manière très préférée, la phase active du catalyseur utilisé dans l'étape a) est la combinaison des éléments nickel-molybdène.

Le rapport molaire métal du groupe VIII sur métal du groupe VIB dans le catalyseur sous forme oxyde est préférentiellement compris entre 0,1 et 0,8, de préférence compris entre 0,15 et 0,6, et de manière encore plus préférée compris entre 0,2 et 0,5.

Ledit catalyseur de l'étape a) comprend également du phosphore en tant que dopant. Le dopant est un élément ajouté qui en lui-même ne présente aucun caractère catalytique mais qui accroit l'activité catalytique de la phase active.

La teneur en phosphore dans ledit catalyseur de l'étape a) est de préférence comprise entre 0,1 et 10 % poids de P₂O₅, de préférence entre 0,2 et 8 % poids de P₂O₅, de manière très préférée entre 0,3 et 8 % poids de P₂O₅.

Le rapport molaire phosphore sur métal du groupe VIB dans le catalyseur de ladite étape a) est supérieur ou égal à 0,05, de préférence supérieur ou égal à 0,07, de manière plus préférée compris entre 0,08 et 0,5.

Le catalyseur utilisé dans l'étape a) selon l'invention peut avantageusement contenir en outre au moins un dopant choisi parmi le bore et le fluor et un mélange de bore et de fluor.

Lorsque le catalyseur d'hydrotraitement contient du bore en tant que dopant, la teneur en bore dans ledit catalyseur sous forme oxyde de ladite étape a) est de préférence comprise entre 0,1 et 10 % poids d'oxyde de bore, de préférence entre 0,2 et 7 % poids d'oxyde de bore, de manière très préférée entre 0,2 et 5 % poids d'oxyde de bore.

Lorsque le catalyseur d'hydrotraitement contient du fluor en tant que dopant, la teneur en fluor dans ledit catalyseur sous forme oxyde issu de ladite étape a) est de préférence comprise entre 0,1 et 10 % poids de fluor, de préférence entre 0,2 et 7 % poids de fluor, de manière très préférée entre 0,2 et 5 % poids de fluor.

Le support amorphe dudit précurseur catalytique est à base d'alumine, c'est-à-dire qu'il contient plus de 50 % d'alumine, et de façon générale, il contient uniquement de l'alumine ou de la silice-alumine telle que définie ci-dessous - et éventuellement des métaux et/ou le(s) dopants), qui ont été introduits en-dehors des imprégnations (introduits par exemple lors de la préparation (malaxage, peptisation...) du support ou de sa mise en forme). Le support est obtenu après mise en forme (extrusion par exemple) et calcination, en général entre 300 et 600°C.

Dans un cas préféré, le support amorphe est une alumine, et de préférence une alumine extrudée. De préférence, l'alumine est l'alumine gamma. De manière particulièrement préférée, le support est constitué d'une alumine et de préférence d'une alumine gamma.

Dans un autre cas préféré, le support amorphe est une silice-alumine contenant au moins 50 % d'alumine. La teneur en silice dans le support est d'au plus 50% poids, le plus souvent inférieure ou égale à 45 % poids, de préférence inférieure ou égale à 40 % poids. De manière particulièrement préférée, le support est constitué d'une silice-alumine.

Le volume poreux du support amorphe est généralement compris entre 0,1 cm³/g et 1,5 cm³/g, de préférence compris entre 0,4 cm³/g et 1,1 cm³/g. Le volume poreux total est mesuré par porosimétrie au mercure selon la norme ASTM D4284-92 avec un angle de mouillage de 140°, telle que décrite dans l'ouvrage Rouquerol F.; Rouquerol J.; Singh K. « Adsorption by Powders & Porous Solids: Principle, methodology and applications », Academic Press, 1999, par exemple au moyen d'un appareil modèle Autopore III™ de la marque Microméritics™.

La surface spécifique du support amorphe est généralement comprise entre 5 m²/g et 350 m²/g, de préférence entre 10 m²/g et 300 m²/g. La surface spécifique est déterminée dans la présente invention par la méthode B.E.T, méthode décrite dans le même ouvrage cité ci-dessus.

Ledit support amorphe se présente avantageusement sous forme de poudre, ou est mis en forme de billes, d'extrudés, de pastilles, ou d'agglomérats irréguliers et non sphériques dont la forme spécifique peut résulter d'une étape de concassage. De manière très avantageuse, ledit support se présente sous forme d'extrudés.

La préparation d'un catalyseur sous forme oxyde frais utilisé dans l'étape a) peut être réalisée par toute méthode bien connue de l'Homme du métier.

Les métaux du groupe VIB et du groupe VIII dudit catalyseur peuvent avantageusement être introduits dans le catalyseur à divers niveaux de la préparation et de diverses manières. Lesdits métaux du groupe VIB et du groupe VIII peuvent avantageusement être introduits en partie lors de la mise en forme dudit support amorphe ou de préférence après cette mise en forme.

Dans le cas où les métaux du groupe VIB et du groupe VIII sont introduits en partie lors de la mise en forme dudit support amorphe, ils peuvent être introduits en partie seulement au moment du malaxage avec un gel d'alumine choisi comme matrice, le reste des métaux étant alors introduits ultérieurement. De manière préférée, lorsque les métaux du groupe VIB et du groupe VIII sont introduits pour partie au moment du malaxage, la proportion du métal du groupe VIB introduite au cours de cette étape est inférieure ou égale à 20 % de la quantité totale du métal du groupe VIB introduite sur le catalyseur final et la proportion du métal du groupe VIII introduite au cours de cette étape est inférieure ou égale à 50 % de la quantité totale du métal du groupe VIII introduite sur le catalyseur final. Dans le cas où les métaux du groupe VIB et du groupe VIII sont introduits au moins en partie et de préférence en totalité, après la mise en forme dudit support amorphe, l'introduction des métaux du groupe VIB et du groupe VIII sur le support amorphe peut être avantageusement effectuée par une ou plusieurs imprégnations en excès de solution sur le support amorphe, ou de préférence par une ou plusieurs imprégnations à sec et de manière préférée, par une seule imprégnation à sec dudit support amorphe, à l'aide de solutions aqueuse ou organique contenant des précurseurs des métaux. L'imprégnation à sec consiste à mettre en contact le support avec une solution contenant au moins un précurseur desdits métal (métaux) du groupe VIB et/ou du groupe VIII, dont le volume est égal au volume poreux du support à imprégner. Le solvant de la solution d'imprégnation peut etre de l'eau ou un composé organique tel qu'un alcool. De préférence, on utilise une solution aqueuse comme solution d'imprégnation.

De manière très préférée, les métaux du groupe VIB et du groupe VIII sont introduits en totalité après la mise en forme dudit support amorphe, par une imprégnation à sec dudit support à l'aide d'une solution d'imprégnation aqueuse contenant les sels précurseurs des métaux. L'introduction les métaux du groupe VIB et du groupe VIII peut également être avantageusement effectuée par une ou plusieurs imprégnations du support amorphe, par une solution contenant les sels précurseurs des métaux. Dans le cas où les métaux sont introduits en plusieurs imprégnations des sels précurseurs correspondants, une étape de séchage intermédiaire du catalyseur est en général effectuée, à une température comprise entre 50 et 180°C, de manière préférée entre 60 et 150°C et de manière très préférée entre 75 et 130°C.

De manière préférée, le métal du groupe VIB est introduit en même temps que le métal du groupe VIII, quel que soit le mode d'introduction.

Les précurseurs de molybdène qui peuvent être utilisés sont bien connus de l'homme du métier. Par exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique (H₃PMo₁₂O₄₀), et leurs sels, et éventuellement l'acide silicomolybdique (H₄SIMo₁₂O₄₀) et ses sels. Les sources de molybdène peuvent être également tout hétéropolycomposé de type Keggin, Keggin lacunaire, Keggin substitué, Dawson, Anderson, Strandberg, par exemple. On utilise de préférence le trioxyde de molybdène et les hétéropolycomposés de type Keggin, Keggin lacunaire, Keggin substitué et Strandberg.

Les précurseurs de tungstène qui peuvent être utilisés sont également bien connus de l'homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique et leurs sels, et éventuellement l'acide silicotungstique (H₄SiW₁₂O₄₀) et ses sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué.

Les précurseurs de cobalt qui peuvent être utilisées sont avantageusement choisis parmi les oxydes, les hydroxydes, les hydroxycarbonates, les carbonates et les nitrates, par exemple. L'hydroxyde de cobalt et l'hydroxycarbonate de cobalt sont utilisés de manière préférée.

Les précurseurs de nickel qui peuvent être utilisées sont avantageusement choisis parmi les oxydes, les hydroxydes, les hydroxycarbonates, les carbonates et les nitrates, par exemple. L'oxyhydroxyde de nickel et le carbonate de nickel sont utilisés de manière préférée.

De la même manière, le phosphore peut avantageusement être introduit dans le catalyseur à divers niveaux de la préparation et de diverses manières. Ledit phosphore peut avantageusement être introduit lors de la mise en forme dudit support amorphe ou de préférence après cette mise en forme. Il peut par exemple être introduit juste avant ou juste après la peptisation de la matrice choisie, telle que par exemple et de préférence l'oxyhydroxyde d'aluminium (boehmite) précurseur de l'alumine. Il peut également être avantageusement introduit seul ou en mélange avec l'un au moins des métaux du groupe VIB et VIII.

Ledit phosphore est de préférence introduit en mélange avec les précurseurs des métaux du groupe VIB et du groupe VIII, en totalité ou en partie sur le support amorphe mis en forme, de préférence l'alumine ou la silice-alumine sous forme extrudée, par une imprégnation à sec dudit support amorphe à l'aide d'une solution contenant les précurseurs des métaux et le précurseur du phosphore.

La source de phosphore préférée est l'acide orthophosphorique H₃PO₄, mais ses sels et esters comme phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg.

Le catalyseur utilisé dans l'étape a) selon l'invention peut avantageusement contenir en outre au moins un dopant choisi parmi le bore et le fluor et un mélange de bore et de fluor. L'introduction de ce dopant peut se faire de la même manière que l'introduction du phosphore à divers niveaux de la préparation et de diverses manières. Il peut être introduit au moins en partie lors de la préparation du support (mise en forme comprise). Il peut être avantageusement introduit seul ou en mélange avec le phosphore ou l'un au moins des précurseurs des métaux du groupe VIB et VIII. Il est de préférence introduit en mélange avec les précurseurs des métaux du groupe VIB et du groupe VIII et le phosphore, en totalité ou en partie sur le support amorphe mis en forme, de préférence l'alumine ou la silice-alumine sous forme extrudée, par une imprégnation à sec dudit support amorphe à l'aide d'une solution contenant les précurseurs des métaux, le précurseur du phosphore et le(s) précurseur(s) du dopant choisi parmi le bore et/ou le fluor.

La source de bore peut être l'acide borique, de préférence l'acide orthoborique H₃BO₃, le biborate ou le pentaborate d'ammonium, l'oxyde de bore, les esters boriques. Le bore peut être introduit par exemple par une solution d'acide borique dans un mélange eau/alcool ou encore dans un mélange eau/ethanolamine.

Les sources de fluor qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Le fluor peut être introduit par exemple par imprégnation d'une solution aqueuse d'acide fluorhydrique, ou de fluorure d'ammonium ou encore de bifluorure d'ammonium.

Dans un mode préféré, le procédé de préparation du catalyseur de l'étape a) du procédé selon l'invention comprend les étapes suivantes :
a') on imprègne une solution contenant au moins un précurseur du métal du groupe VIB, au moins un précurseur du métal du groupe VIII, du phosphore, éventuellement un autre dopant choisi parmi le bore et/ou le fluore, sur un support amorphe à base d'alumine,
a") on sèche éventuellement le support imprégné issu de l'étape a'),
a"') on calcine le support imprégné éventuellement séché, de manière à transformer les précurseurs des métaux du groupe VIB et du groupe VIII en oxydes.

L'étape a') d'imprégnation est effectuée selon les variantes décrites ci-dessus. De manière très préférée, les métaux du groupe VIB et du groupe VIII, le phosphore et éventuellement un autre dopant choisi parmi le bore et/ou le fluore sont introduits en totalité après la mise en forme dudit support amorphe, par une imprégnation à sec dudit support à l'aide d'une solution d'imprégnation aqueuse contenant les sels précurseurs des métaux, du phosphore et éventuellement du dopant choisi parmi le bore et/ou le fluore.

Le séchage de l'étape a") est généralement effectué à une température comprise entre 50 et 180°C, de préférence entre 60 et 150°C et de manière très préférée entre 75 et 130°C. Le séchage est généralement réalisé pendant une durée comprise entre 1 et 24 heures, de préférence entre 1 et 20 heures. Le séchage est effectué sous air, ou sous atmosphère inerte (azote par exemple).

La calcination de l'étape a"') est généralement effectuée à une température comprise entre 250°C et 900°C, de préférence compte entre 350°C et 750°C. La durée de calcination est généralement comprise entre 0,5 heures et 16 heures, de préférence entre 1 heures et 5 heures. Elle s'effectue généralement sous air. La calcination permet de transformer les précurseurs des métaux du groupe VIB et VIII en oxydes.

Avant son utilisation, il est avantageux de transformer le catalyseur sous forme oxyde (calciné) utilisé dans l'étape a) du procédé selon l'invention en un catalyseur sulfuré afin de former son espèce active. Cette phase d'activation ou de sulfuration s'effectue par les méthodes bien connues de l'homme de l'art, et avantageusement sous une atmosphère sulfo-réductrice en présence d'hydrogène et d'hydrogène sulfuré.

Cette transformation en catalyseur sulfuré est de préférence effectuée sur tous types de catalyseur sous forme oxyde, c'est-à-dire qu'elle peut être effectuée sur un catalyseur frais ou un catalyseur régénéré.

L'étape de sulfuration est avantageusement effectuée de manière *ex situ* ou *in situ.* Les agents sulfurants sont le gaz H₂S ou tout autre composé contenant du soufre utilisé pour l'activation des charges hydrocarbures en vue de sulfurer le catalyseur. Lesdits composés contenant du soufre sont avantageusement choisis parmi les alkyldisulfures tels que par exemple le disulfure de diméthyle (DMDS), les alkylsulfures, tel que par exemple le sulfure de diméthyle, le n-butylmercaptan, les composés polysulfures de type tertiononylpolysulfure ou tout autre composé connus de l'homme du métier permettant d'obtenir une bonne sulfuration du catalyseur. De manière préférée le catalyseur est sulfuré *in situ* en présence d'un agent sulfurant et d'une charge hydrocarbonée. De manière très préférée le catalyseur est sulfuré *in situ* en présence d'une charge hydrocarbonée additivée de disulfure de diméthyle.

### Etape b) : Hydrotraitement avec un catalyseur additivé

Selon l'étape b) du procédé selon l'invention, on met en contact en présence d'hydrogène l'effluent obtenu à l'étape a) avec au moins un deuxième catalyseur comprenant un support amorphe à base d'alumine, du phosphore, une phase active formée d'au moins un métal du groupe VIB et d'au moins un métal du groupe VIII et au moins un composé organique contenant de l'oxygène et/ou de l'azote, ledit deuxième catalyseur étant préparé selon un procédé comprenant les étapes suivantes :
i) on met en contact au moins un composant d'un métal du groupe VIB, au moins un composant d'un métal du groupe VIII, du phosphore et au moins un composé organique contenant de l'oxygène et/ou de l'azote avec le support, de manière à obtenir un précurseur de catalyseur,
ii) on sèche ledit précurseur de catalyseur issu de l'étape i) à une température inférieure à 200°C, sans le calciner ultérieurement

Le catalyseur utilisé dans l'étape b) selon l'invention est composé d'un support amorphe à base d'alumine, de phosphore, d'une phase active formée d'au moins un métal du groupe VIB et d'au moins un métal du groupe VIII, et d'un composé organique contenant de l'oxygène ou de l'azote. Le catalyseur utilisé dans l'étape b) est un catalyseur dit additivé. Lors de sa préparation il ne subit pas de calcination, c'est-à-dire que sa phase active comprend les métaux du groupe VIB et VIII qui n'ont pas été transformés sous forme oxyde.

La teneur totale en métal du groupe VIII et en métal du groupe VIB ainsi que le rapport molaire métal du groupe VIII sur métal du groupe VIB du catalyseur selon l'étape b) sont dans les mêmes gammes que celles décrites pour le catalyseur de l'étape a).

Le métal du groupe VIB présent dans la phase active du catalyseur mis en oeuvre dans l'étape b) selon l'invention est préférentiellement choisi parmi le molybdène, le tungstène et le mélange de ces deux éléments, et très préférentiellement, le métal du groupe VIB est le molybdène.

Le métal du groupe VIII présent dans la phase active du catalyseur mis en oeuvre dans l'étape b) selon l'invention est préférentiellement choisi parmi le cobalt, le nickel et le mélange de ces deux éléments. De manière particulièrement préférée, métal du groupe VIII est le nickel.

De préférence, la phase active du catalyseur utilisé dans l'étape b) est choisie dans le groupe formé par la combinaison des éléments nickel-molybdène, cobalt-molybdène, et nickel-cobalt-molybdène. De manière particulièrement préférée, la phase active est constituée de nickel-molybdène.

Le catalyseur additivé utilisé dans l'étape b) comprend également du phosphore en tant que dopant. La teneur en phosphore du catalyseur selon l'étape b) ainsi que le rapport molaire phosphore sur métal du groupe VIB du catalyseur selon l'étape b) sont dans les mêmes gammes que celles décrites pour le catalyseur de l'étape a).

Le catalyseur utilisé dans l'étape b) selon l'invention peut avantageusement contenir en outre au moins un dopant choisi parmi le bore et/ou le fluor. Lorsque le catalyseur utilisé dans l'étape b) contient du bore et/ou du fluor, la teneur en bore et/ou en fluor sont dans les mêmes gammes que celles décrites pour le catalyseur de l'étape a).

Le support amorphe dudit catalyseur utilisé dans l'étape b) est à base d'alumine. Il a été décrit dans la partie étape a). Le support du catalyseur additivé selon l'étape b) peut être identique ou différent du support du catalyseur utilisé dans l'étape a).

Le catalyseur utilisé dans l'étape b) contient en outre un composé organique contenant de l'oxygène et/ou de l'azote. Ce composé est un composé organique contenant plus de 2 atomes de carbone et au moins un atome d'oxygène et/ou d'azote.

Le composé organique_contenant de l'oxygène peut être l'un ou plusieurs choisis parmi un acide carboxylique, un alcool, un aldéhyde ou un ester. A titre d'exemple, le composé organique contenant de l'oxygène peut être l'un ou plusieurs choisis dans le groupe constitué par l'éthylène glycol, le glycérol, le polyéthylène glycol (avec un poids moléculaire de 200 à 1500), l'acétophénone, le 2,4-pentanedione, le pentanole, l'acide acétique, l'acide maléique, l'acide oxalique, l'acide tartrique, l'acide formique, l'acide citrique et le succinate de dialkyle C1-C4. Le succinate de dialkyle utilisé est de préférence compris dans le groupe composé du succinate de diméthyle, du succinate de diéthyle, du succinate de dipropyle et du succinate de dibutyle. De manière préférée, le succinate de dialkyle C1-C4 utilisé est le succinate de diméthyle ou le succinate de diéthyle. De manière très préférée, le succinate de dialkyle C1-C4 utilisé est le succinate de diméthyle. Au moins un succinate de dialkyle C1-C4 est utilisé, de préférence un seul, et de préférence le succinate de diméthyle.

Le composé organique contenant de l'azote peut être choisi parmi une amine. A titre d'exemple, le composé organique contenant de l'azote peut être de l'éthylène diamine ou la tétraméthylurée.

Le composé organique contenant de l'oxygène et d'azote peut être choisi parmi un acide carboxylique aminé, un alcool aminé, un nitrile ou un amide. A titre d'exemple, le composé organique contenant de l'oxygène et de l'azote peut être l'acide aminotriacétique l'acide 1,2-cyclohexanediaminetétraacétique, la mono-éthanolamine, l'acétonitrile, la N-méthylpyrrolidone, le diméthylformamide ou encore l'EDTA.

De préférence, le composé organique contient de l'oxygène. De manière particulièrement préférée, le composé organique comprend au moins la combinaison du succinate de dialkyle C1-C4, et en particulier du diméthyle, et de l'acide acétique. Selon une autre variante particulièrement préférée, le composé organique comprend au moins l'acide citrique.

Le catalyseur utilisé dans l'étape b) est préparé selon un procédé comprenant les étapes suivantes :
i) on met en contact au moins un composant d'un métal du groupe VIB, au moins un composant d'un métal du groupe VIII, du phosphore et au moins un composé organique contenant de l'oxygène et/ou de l'azote avec le support, de manière à obtenir un précurseur de catalyseur,
ii) on sèche ledit précurseur de catalyseur issu de l'étape i) à une température inférieure à 200°C, sans le calciner ultérieurement

L'étape i) de mise en contact comporte plusieurs modes de mise en oeuvre. Selon le premier mode de mise en oeuvre de l'étape i) du procédé de préparation du catalyseur utilisé dans l'étape b), on procède au dépôt desdits composant des métaux du groupe VIB et du groupe VIII, du phosphore et à celui dudit composé organique, sur ledit support, par au moins une étape de co-imprégnation, préférentiellement par imprégnation à sec. Selon ce mode de mise en oeuvre, aussi appelé "co-imprégnation", lesdits composants des métaux du groupe VIB et du groupe VIII, le phosphore, et le composé organique sont introduits simultanément dans ledit support. Ledit premier mode de mise en oeuvre de l'étape i) comprend la mise en oeuvre d'une ou plusieurs étapes de co-imprégnation, chaque étape de co-imprégnation étant de préférence suivi d'une étape de séchage tel que décrite selon l'étape i") ci-dessous.

Selon le deuxième mode de mise en oeuvre de l'étape i) du procédé de préparation du catalyseur utilisé dans l'étape b) on met en contact au moins un précurseur catalytique comprenant au moins un métal du groupe VIII, au moins un métal du groupe VIB, ledit phosphore et au moins ledit support amorphe à base d'alumine avec au moins un composé organique contenant de l'oxygène et/ou de l'azote. Selon l'invention, ledit deuxième mode de mise en oeuvre est une préparation dite "post-imprégnation". Selon cette variante de réalisation, le précurseur de catalyseur est préparé en procédant au dépôt d'au moins un composant d'un métal du groupe VIB et d'au moins un composant d'un métal du groupe VIII et du phosphore sur ledit support par toute méthode connue de l'Homme du métier, préférentiellement par imprégnation à sec, imprégnation en excès ou encore par dépôt-précipitation selon des méthodes bien connues de l'Homme du métier. Le dépôt des composants des métaux des groupes VIB et VIII et du phosphore peut être effectué par une ou plusieurs imprégnations, de préférence suivi d'une étape de séchage telle que décrite selon l'étape i") ci-dessous.

Selon une variante particulièrement préférée, la mise en contact selon l'étape i) est effectuée par le deuxième mode de mise en oeuvre de l'étape i), c'est-à-dire par post imprégnation. Selon une variante particulièrement préférée, le catalyseur utilisé dans l'étape b) est préparé selon le procédé de préparation décrit dans US 2013/008829. Plus précisément, l'étape i) du procédé de préparation du catalyseur de l'étape b) peut comprendre les étapes successives suivantes qui vont être détaillées par la suite :
i') on imprègne un support amorphe à base d'alumine par au moins une solution contenant au moins un métal du groupe VIB, au moins un métal du groupe VIII et ledit phosphore pour obtenir un support imprégné,
i") on sèche le support imprégné obtenu à l'étape i') à une température inférieure à 180°C sans calcination ultérieure pour obtenir unsupport imprégné séché,
i"') on imprègne le support imprégné séché obtenu à l'étape i") par une solution d'imprégnation comprenant au moins un composé organique contenant de l'oxygène et/ou de l'azote pour obtenir un précurseur catalytique imprégné,
i"") on laisse maturer le précurseur catalytique imprégné obtenu à l'étape i"') pour obtenir ledit précurseur de catalyseur.

Dans l'étape i'), l'introduction des métaux du groupe VIB et du groupe VIII sur le support amorphe peut être avantageusement effectuée par une ou plusieurs imprégnations en excès de solution sur le support amorphe, ou de préférence par une ou plusieurs imprégnations à sec et de manière préférée par une imprégnation à sec dudit support amorphe, à l'aide d'une solution aqueuse ou organique contenant des précurseurs des métaux. L'étape d'imprégnation peut être effectuée de la même manière que celle décrite pour la préparation du catalyseur sous forme oxyde décrite à l'étape a). Les précurseurs du métal du groupe VIB et du groupe VIII sont ceux décrits pour l'étape a). Ledit phosphore et l'éventuel autre dopant choisi parmi le bore et/ou le fluoré peuvent être introduits de la même manière que celle décrite à l'étape a). Les précurseurs du phosphore, du bore et du fluore sont ceux décrits à l'étape a).

L'introduction des métaux du groupe VIB et du groupe VIII et du phosphore dans ou sur le support amorphe est ensuite avantageusement suivie d'une étape i") de séchage au cours de laquelle le solvant (qui est généralement de l'eau) est éliminé, à une température comprise entre 50 et 180°C, de manière préférée entre 60 et 150°C ou encore entre 65 et 145°C et de maniée très préférée entre 70 et 140°C ou encore entre 75 et 130°C. L'étape de séchage du support imprégné séché ainsi obtenu n'est jamais suivie d'une étape de calcination sous air à une température supérieure à 200°C.

De préférence, dans l'étape i'), ledit support imprégné est obtenu par imprégnation à sec d'une solution comprenant des précurseurs des métaux du groupe VIB et du groupe VIII, et du phosphore sur un support amorphe à base d'alumine calciné mis en forme, suivie d'un séchage à une température inférieure à 180°C, de préférence comprise entre 50 et 180 °C, de manière préférée entre 60 et 150°C et de manière très préférée entre 75 et 130°C Il est ainsi obtenu un support imprégné séché à l'issue de l'étape i").

Conformément à l'étape i"'), ledit support imprégné séché est imprégné par une solution d'imprégnation comprenant au moins un composé organique contenant de l'oxygène et/ou de l'azote, et de préférence le succinate de dialkyle C1-C4 (et en particulier du succinate de diméthyle) et de l'acide acétique. Selon une autre variante, la solution d'imprégnation de l'étape i"') comprend de préférence de l'acide citrique. La solution d'imprégnation comprenant au moins ledit composé organique est de préférence une solution aqueuse.

Le rapport molaire de composé(s) organique(s) contenant de l'oxygène et/ou de l'azote par élément(s) du groupe VIB imprégné du précurseur catalytique, engagé sur le catalyseur est compris entre 0,05 à 2 mol/mol, de préférence compris entre 0,1 à 1,8 mol/mol, de manière préférée compris entre 0,15 et 1,5 mol/mol avant séchage de l'étape ii). Lorsque le composant organique est un mélange de succinate de dialkyle C1-C4 (et en particulier du succinate de diméthyle) et de l'acide acétique, lesdits composants sont avantageusement introduits dans la solution d'imprégnation de l'étape i"') du procédé selon l'invention dans une quantité correspondant :
- à un rapport molaire de succinate de dialkyle (par ex diméthyle) par élément(s) du groupe VIB imprégné du précurseur catalytique compris entre 0,05 à 2 mol/mol, de préférence compris entre 0,1 à 1,8 mol/mol, de manière préférée compris entre 0,15 et 1,5 mol/mol,
- à un rapport molaire d'acide acétique par élément(s) du groupe VIB imprégné du précurseur catalytique compris entre 0,1 à 5 mol/mol, de préférence compris entre 0,5 à 4 mol/mol, de manière préférée compris entre 1,3 et 3 mol/mol et de manière très préférée, compris entre 1,5 et 2,5 mol/mol.

Le(s)dit(s) composé(s) organique(s) peut(vent) avantageusement être déposé(s) en une ou plusieurs étapes soit par imprégnation en slurry, soit par imprégnation en excès, soit par imprégnation à sec, soit par tout autre moyen connus de l'homme du métier.

Conformément à l'étape i"'), le composé organique contenant de l'oxygène ou de l'azote est introduit sur le support imprégné séché par au moins une étape d'imprégnation et de préférence par une seule étape d'imprégnation d'une solution d'imprégnation sur ledit précurseur catalytique séché, et de manière particulièrement préférée par une seul étape d'imprégnation à sec.

Conformément à l'étape i"") du procédé de préparation selon l'invention, le précurseur catalytique imprégné issu de l'étape i"') est soumis à d'une étape de maturation. Elle est avantageusement réalisée à pression atmosphérique et à une température comprise entre 17°C et 50°C et généralement une durée de maturation comprise entre dix minutes et quarante huit heures et de préférence comprise entre trente minutes et cinq heures, est suffisante. Des durées plus longues ne sont pas exclues. Il est ainsi obtenu est un précurseur de catalyseur à l'issue de l'étape i"").

Conformément à l'étape ii) du procédé de préparation selon l'invention, le précurseur de catalyseur issu de l'étape i) est soumis à une étape de séchage à une température inférieure à 200°C, sans le calciner utérieurement.

L'étape ii) de séchage du procédé selon l'invention est avantageusement effectuée par toute technique connue de l'homme du métier. Elle est avantageusement effectuée à pression atmosphérique ou à pression réduite. De manière préférée cette étape est réalisée à pression atmosphérique.

Cette étape ii) est avantageusement effectuée à une température comprise entre 50 et inférieure à 200°C, de préférence comprise entre 60 et 180 °C et de manière très préférée, comprise entre 80 et 160 °C.

L'étape ii) est avantageusement effectuée en lit traversé en utilisant de l'air ou tout autre gaz chaud. De manière préférée, lorsque le séchage est effectué en lit fixe, le gaz utilisé est soit l'air, soit un gaz inerte comme l'argon ou l'azote. De manière très préférée le séchage est réalisé en lit traversé en présence d'azote.

De préférence, cette étape a une durée comprise entre 30 minutes et 4 heures, et de préférence entre 1 heure et 3 heures.

A l'issue de l'étape ii) du procédé selon l'invention, on obtient un catalyseur séché, aussi appelé "catalyseur additivé", qui n'est soumis à aucune étape de calcination ultérieure sous air par exemple à une température supérieure à 200°C.

Avant son utilisation, il est avantageux de transformer le catalyseur additivé utilisé dans l'étape b) en un catalyseur sulfuré afin de former son espèce active. Cette phase d'activation ou de sulfuration s'effectue par les méthodes bien connues de l'homme de l'art, et avantageusement sous une atmosphère sulfo-réductrice en présence d'hydrogène et d'hydrogène sulfuré.

A l'issue de l'étape ii) du procédé selon l'invention, ledit catalyseur additivé obtenu est donc avantageusement soumis à une étape iii) de sulfuration, sans étape de calcination intermédiaire.

Ledit catalyseur additivé est avantageusement sulfuré de manière *ex situ* ou *in situ.* On peut utiliser les mêmes agents sulfurants que ceux décrites pour le catalyseur sous forme oxyde dans l'étape a).

Lorsque la sulfuration est effectuée *in situ,* la sulfuration du catalyseur de l'étape b) est avantageusement effectuée en même temps que la sulfuration du catalyseur de l'étape a).

### Application du procédé selon l'invention dans un procédé d'hydrocraquage

Le procédé d'hydrotraitement selon l'invention est avantageusement mis en oeuvre comme prétraitement dans un procédé d'hydrocraquage, et plus particulièrement dans un procédé d'hydrocraquage dit en «une étape» ou dans un procédé d'hydrocraquage dit en «deux étapes». Le procédé d'hydrocraquage permet de convertir des fractions pétrolières, en particulier les distillats sous vide (DSV) en produits plus légers et plus valorisables (essence, distillats moyens).

Un procédé d'hydrocraquage dit en "une étape", comporte en premier lieu et de façon générale un hydrotraitement poussé qui a pour but de réaliser une hydrodéazotation et une désulfuration poussées de la charge avant que celle-ci ne soit envoyée sur le ou les catalyseurs d'hydrocraquage. Ledit procédé d'hydrocraquage en une étape est particulièrement avantageux lorsque le(s)dit(s) catalyseur(s) d'hydrocraquage comprenne(nt) un support comportant des cristaux de zéolithe. Cet hydrotraitement poussé de la charge n'entraîne qu'une conversion limitée de la charge, en fractions plus légères, qui reste insuffisante et doit donc être complétée sur le(s) catalyseur(s) d'hydrocraquage plus actif(s). Cependant, il est à noter qu'aucune séparation des effluents n'intervient entre les différents lits catalytiques : la totalité de l'effluent en sortie du lit catalytique d'hydrotraitement est injectée sur le ou les lit(s) catalytique(s) contenant le(s)dit(s) catalyseur(s) d'hydrocraquage puis une séparation des produits formés est réalisée. Cette version de l'hydrocraquage, possède une variante qui présente un recyclage de la fraction non convertie vers au moins l'un des lits catalytiques d'hydrocraquage en vue d'une conversion plus poussée de la charge. Avantageusement, procédé d'hydrotraitement selon l'invention comprenant l'enchaînement spécifique selon les étapes a) et b), est mis en oeuvre en amont d'un catalyseur d'hydrocraquage dans un procédé d'hydrocraquage en une étape. Il permet en outre de limiter la teneur en azote organique à l'issue de l'étape de prétraitement afin de protéger le catalyseur d'hydrocraquage à base de zéolithe qui est très sensible à l'azote organique.

Un procédé d'hydrocraquage dit en en "deux étapes", comporte une première étape qui a pour objectif, comme dans le procédé "une étape", de réaliser l'hydrotraitement de la charge, mais aussi d'atteindre une conversion de cette dernière de l'ordre en général de 40 à 60%. L'effluent issu de la première étape subit ensuite une séparation, généralement par distillation, appelée le plus souvent séparation intermédiaire, qui a pour objectif de séparer les produits de conversion de la fraction non convertie. Dans la deuxième étape du procédé d'hydrocraquage en deux étapes selon l'invention, seule la fraction de la charge non convertie lors de la première étape, est traitée. Cette séparation permet au procédé d'hydrocraquage deux étapes selon l'invention d'être plus sélectif en distillat moyen (kérosène + diesel) que le procédé en une étape selon l'invention. En effet, la séparation intermédiaire des produits de conversion évite leur "sur-craquage" en naphta et gaz dans la deuxième étape sur le(s) catalyseur(s) d'hydrocraquage. Par ailleurs, il est à noter que la fraction non convertie de la charge traitée dans la deuxième étape contient en général de très faibles teneurs en NH₃ ainsi qu'en composés azotés organiques, en général moins de 20 ppm poids voire moins de 10 ppm poids.

Ladite première étape est mise en oeuvre en présence de l'enchaînement spécifique de catalyseurs selon l'invention, et d'un catalyseur d'hydrocraquage afin d'effectuer un hydrotraitement et une conversion de l'ordre en général de 40 à 60%. Les lits catalytiques de l'enchaînement spécifique de catalyseurs selon l'invention se trouvent avantageusement en amont du catalyseur d'hydrocraquage. Ladite deuxième étape est généralement mise en oeuvre en présence d'un catalyseur d'hydrocraquage de composition différente de celui présent pour la mise en oeuvre de ladite première étape.

Les procédés d'hydrocraquage sont généralement effectués à une température comprise entre 250 et 480°C, avantageusement comprise entre 320 et 450°C, de préférence entre 330 et 435°C, sous une pession comprise entre 2 et 25 MPa, de manière préférée entre 3 et 20 MPa, la vitesse spatiale (débit volumique de charge divisé par le volume du catalyseur) étant comprise entre 0,1 et 20h⁻¹ et de préférence entre 0,1 et 6h⁻¹, de préférence entre 0,2 et 3h⁻¹, et la quantité d'hydrogène introduite est telle que le rapport volumique litre d'hydrogène / litre d'hydrocarbure soit compris entre 80 et 5000I/I et le plus souvent entre 100 et 2000 I/I.

Les catalyseurs d'hydrocraquage sont du type bifonctionnel : ils associent une fonction acide à une fonction hydro-déshydrogénante. La fonction acide est apportée par des supports poreux dont les surfaces varient généralement de 150 à 800 m².g⁻¹ et présentant une acidité superficielle, telles que les alumines halogénées (chlorées ou fluorées notamment), les combinaisons d'oxydes de bore et d'aluminium, les aluminosilicates mésoporeux amorphes ou cristallisés et les zéolithes dispersées dans un liant oxyde. La fonction hydro-déshydrogénante est apportée par la présence d'une phase active à base d'au moins un métal du groupe VIB et éventuellement au moins un métal du groupe VIII du tableau périodique des éléments. Les formulations les plus courantes sont de type nickel-molybdène (NiMo) et nickel-tungstène (NiW) et plus rarement de type cobalt-molybdène (CoMo). Après préparation, la fonction hydro-déshydrogénante se présente souvent sous forme d'oxyde. Les méthodes usuelles conduisant à la formation de la phase hydro-déshydrogénante des catalyseurs d'HCK consistent en un dépôt de précurseur(s) moléculaire(s) d'au moins un métal du groupe VIB et éventuellement au moins un métal du groupe VIII sur un support oxyde acide par la technique dite "d'imprégnation à sec" suivi des étapes de maturation, séchage et calcination conduisant à la formation de la forme oxydée du(des)dit(s) métal(aux) employé(s). La forme active et stable pour les procédés d'HCK étant la forme sulfurée, ces catalyseurs doivent subir une étape de sulfuration. Celle-ci peut être réalisée dans l'unité du procédé associé (on parle alors de sulfuration in-situ) ou préalablement au chargement du catalyseur dans l'unité (on parle alors de sulfuration ex-situ).

### Application du procédé selon l'invention dans un procédé de FCC

Alternativement, le procédé d'hydrotraitement selon l'invention est avantageusement mis en oeuvre comme prétraitement dans un procédé de craquage catalytique à lit fluidisé (ou procédé FCC pour Fluid Catalytic Cracking selon la terminologie anglo-saxonne). Le procédé FCC peut etre exécutée de manière classique connue des hommes du métier dans les conditions adéquates de craquage en vue de produire des produits hydrocarbonés de plus faible poids moléculaire. On trouvera par exemple une description sommaire du craquage catalytique (dont la première mise en oeuvre industrielle remonte a 1936 (procédé HOUDRY) ou en 1942 pour l'utilisation de catalyseur en lit fluidise) dans ULLMANS ENCYCLOPEDIA OF INDUSTRIAL CHEMISTRY VOLUME A 18, 1991, pages 61 a 64.

On utilise habituellement un catalyseur classique comprenant une matrice, éventuellement un additif et au moins une zéolithe. La quantité de zéolithe est variable mais habituellement d'environ 3 à 60 % en poids, souvent d'environ 6 à 50 % en poids et le plus souvent d'environ 10 a 45 % en poids. La zéolithe est habituellement dispersée dans la matrice. La quantité d'additif est habituellement d'environ 0 à 30 % en poids et souvent d'environ 0 à 20 % en poids. La quantité de matrice représente le complément à 100 % en poids. L'additif est généralement choisi dans le groupe forme par les oxydes des métaux du groupe IIA de la classification périodique des éléments tels que par exemple l'oxyde de magnésium ou l'oxyde de calcium, les oxydes des terres rares et les titanates des métaux du groupe IIA. La matrice est le plus souvent une silice, une alumine, une silice-alumine, une silice-magnésie, une argile ou un mélange de deux ou plusieurs de ces produits. La zéolithe la plus couramment utilisée est la zéolithe Y.

On effectue le craquage dans un réacteur sensiblement vertical soit en mode ascendant (riser) soit en mode descendant (dropper). Le choix du catalyseur et des conditions opératoires sont fonctions des produits recherchés en fonction de la charge traitée comme cela est par exemple décrit dans l'article de M. MARCILLY pages 990-991 publie dans la revue de l'institut français du pétrole nov.-dec. 1975 pages 969-1006. On opère habituellement a une température d'environ 450 a environ 600°C et des temps de séjour dans le réacteur inférieur a 1 minute souvent d'environ 0,1 a environ 50 secondes.

Le prétraitement permet en outre de limiter la teneur en azote organique à l'issue de l'étape de prétraitement afin de protéger le catalyseur de craquage catalytique à base de zéolithe qui est très sensible à l'azote organique.

### Exemples

Les exemples qui suivent démontrent qu'un procédé d'hydrotraitement selon l'invention utilisant un enchaînement de catalyseurs sous forme oxyde/catalyseur additivé présente une activité améliorée, notamment en HDN, et une stabilité améliorée par rapport à un procédé n'utilisant que des catalyseurs additivés.

### Préparation des catalyseurs A, B, C et D :

### Préparation du support

Une matrice composée de boehmite tabulaire ultrafine ou gel d'alumine a été utilisée. Ce gel a été mélangé à une solution aqueuse contenant de l'acide nitrique à 66 % (7 % en poids d'acide par gramme de gel sec), puis malaxé pendant 15 minutes. A l'issue de ce malaxage, la pâte obtenue est passée à travers une filière ayant des orifices cylindriques de diamètre égal à 1,6 mm. Les extrudés sont ensuite séchés pendant une nuit à 120°C, puis calcinés à 600°C pendant 2 heures sous air humide contenant 50 g d'eau par kg d'air sec. On obtient ainsi des extrudés de support, ayant une surface spécifique de 300 m²/g. L'analyse par la diffraction des rayons X révèle que le support est uniquement composé d'alumine gamma cubique de faible cristallinité.

### Catalyseur A : catalyseur calciné NiMoP/alumine

Sur le support d'alumine décrit précédemment et qui se présente sous la forme extrudé, on ajoute dans le cas du catalyseur A à base de nickel, du nickel, du molybdène et du phosphore. La solution d'imprégnation est préparée par dissolution à chaud de l'oxyde de molybdène et d'hydroxycarbonate de nickel dans la solution d'acide phosphorique en solution aqueuse dans le but d'obtenir une formulation approximativement de 4/22/5 exprimée en % poids d'oxydes de nickel, de molybdène et en % poids d'anhydride phosphorique par rapport à la quantité de matière sèche du catalyseur final. Après imprégnation à sec, les extrudés sont laissés à maturer en atmosphère saturée en eau pendant 8 h, puis ils sont séchés une nuit à 90°C. La calcination à 450°C pendant 2 heures conduit au catalyseur A.

La composition finale du catalyseur A exprimée sous forme d'oxydes est alors la suivante : MoO₃ = 22,0 +- 0,2 (% en poids), NiO = 4,1 +- 0,1 (% en poids) et P₂O₅ = 5,0 +- 0, 1 (% en poids).

### Catalyseur B : catalyseur NiMoP/alumine additivé avec de l'acide acétique et du succinate de diméthyle (DMSU)

Sur le support d'alumine décrit précédemment et qui se présente sous la forme extrudé, on ajoute dans le cas du catalyseur B à base de nickel, du nickel, du molybdène et du phosphore. La solution d'imprégnation est préparée par dissolution à chaud de l'oxyde de molybdène et d'hydroxycarbonate de nickel dans la solution d'acide phosphorique en solution aqueuse dans le but d'obtenir une formulation approximativement de 5/25/6 exprimée en % poids d'oxydes de nickel, de molybdène et en % poids d'anhydride phosphorique par rapport à la quantité de matière sèche du catalyseur final. Après imprégnation à sec, les extrudés sont laissés à maturer en atmosphère saturée en eau pendant 8 h, puis ils sont séchés une nuit à 90°C. Le support imprégné séché du catalyseur C est ensuite additivé par imprégnation à sec d'une solution contenant un mélange succinate de diméthyle (DMSU) et acide acétique (à 75 % de pureté). Les rapports molaires sont les suivants: DMSU/Mo = 0,85 mol/mol, DMSU/acide acétique = 0,5 mol/mol. Le catalyseur subit encore une étape de maturation de 3 h à 20°C sous air puis un séchage dans un four de type lit traversé à 120°C pendant 3 h.

La composition finale du catalyseur B exprimée sous forme d'oxydes est alors la suivante : MoO₃ = 25,1 +- 0,2 (% en poids), NiO = 5,1 +- 0,1 (% en poids) et P₂O₅ = 6,0 +- 0, 1 (% en poids).

### Catalyseur C : catalyseur NiMoP/alumine additivé avec de l'acide citrique

Sur le support d'alumine décrit précédemment et qui se présente sous la forme extrudé, on ajoute dans le cas du catalyseur C à base de nickel, du nickel, du molybdène et du phosphore. La solution d'imprégnation est préparée par dissolution à chaud de l'oxyde de molybdène et d'hydroxycarbonate de nickel et de l'acide citrique dans la solution d'acide phosphorique en solution aqueuse dans le but d'obtenir une formulation approximativement de 5/25/6 exprimée en % poids d'oxydes de nickel, de molybdène et en % poids d'anhydride phosphorique par rapport à la quantité de matière sèche du catalyseur final. La quantité d'acide citrique exprimée en rapport molaire par rapport au molybdène est de acide citrique/Mo = 0,4 mol/mol. Après imprégnation à sec, les extrudés sont laissés à maturer en atmosphère saturée en eau pendant 8 h, puis ils sont séchés une nuit à 90°C puis subissent un séchage dans un four de type lit traversé à 140°C pendant 3 h.

La composition finale du catalyseur C exprimée sous forme d'oxydes est alors la suivante : MoO₃ = 22,5 +- 0,2 (% en poids), NiO = 4,2 +- 0,1 (% en poids) et P₂O₅ = 5,0 +- 0, 1 (% en poids).

### Catalyseur D : catalyseur NiMoWP/silice-alumine additivé avec de l'acide citrique

Une poudre de silice-alumine a été préparée par coprécipitation avec une composition de 30% SiO₂ et 70% Al₂O₃. Un support de catalyseur contenant cette silice-alumine a été ensuite fabriqué. Pour cela on mélange une matrice composée de la silice alumine préparée ci-dessus à une solution aqueuse contenant de l'acide nitrique à 66% (7% poids d'acide par gramme de gel sec), puis on malaxe pendant 15 minutes. A l'issue de ce malaxage, la pâte obtenue est passée à travers une filière ayant des orifices trilobés de diamètre égal à 2 mm. Les extrudés sont ensuite séchés pendant une nuit à 120°C puis calcinés à 550°C pendant 2 heures sous air. Les extrudés subissent enfin un traitement sous vapeur d'eau à 750°C pendant 2h. Ces extrudés constituent le support silice-alumine. La solution d'imprégnation est préparée par dissolution à chaud de l'oxyde de molybdène et d'hydroxycarbonate de nickel, acide phosphotungstique et de l'acide citrique dans la solution d'acide phosphorique en solution aqueuse dans le but d'obtenir une formulation approximativement de 6/2/18/5 exprimée en % poids d'oxydes de nickel, de molybdène, de tungstène et en % poids d'anhydride phosphorique par rapport à la quantité de matière sèche du catalyseur final. La quantité d'acide citrique exprimée en rapport molaire par rapport au molybdène est de acide citrique/Mo = 0,4 mol/mol.

La composition finale du catalyseur D exprimée sous forme d'oxydes est alors la suivante : MoO₃ = 6.2 +- 0,2 (% en poids), NiO = 2.4 +- 0,1 (% en poids) WO₃= 18.1 +- 0,1 (% en poids) et P₂O₅ = 5,0 +- 0, 1 (% en poids).

### Évaluation de différents enchaînements des catalyseurs A, B, C et D en hydrotraitement d'un distillat sous vide

La charge utilisée est un distillat sous vide et a une TMP de 474°C C (T5%= 389°C, T50%= 468°C, T70%= 498°C). Les caractéristiques de la charge sont les suivantes : soufre 2.6 % poids, azote 1350 ppm, azote basique 392 ppm, résines 9.1%pds.

Le test est mené dans un réacteur pilote isotherme à lit fixe traversé, les fluides circulant de bas en haut. Le réacteur comprend deux zones catalytiques permettant d'évaluer différents enchaînements des catalyseurs A, B, C et D. La charge traverse d'abord la première zone chargée avec le premier catalyseur, puis la deuxième zone chargée avec le deuxième catalyseur.

Selon l'exemple 1 (non conforme à l'invention), l'intégralité des deux zones catalytiques (100% du volume) contient du catalyseur additivé (catalyseur B).

Selon l'exemple 2 (non conforme à l'invention), l'intégralité des deux zones catalytiques (100% du volume) contient du catalyseur calciné (catalyseur A).

Selon les exemples 3, 4 et 5 (conformes à l'invention), la première zone est chargé avec un catalyseur calciné (catalyseurs A: 30 % du volume), puis la deuxième avec un catalyseur additivé (catalyseur B, C ou D : 70 % du volume).

Après sulfuration in situ à 350 °C dans l'unité sous pression au moyen du distillat sous vide du test auquel est additionné 2 % en poids de diméthyldisulfure, le test d'hydrotraitement a été conduit dans les conditions opératoires suivantes : une pression totale de 150 bar (15 Mpa), une VVH de 2 h⁻¹, un rapport H2/charge de 1000 l/h et une température de 380°C.

Le tableau suivant montre le pourcentage d'HDN et d'HDS effectué dans le réacteur ainsi que la stabilité de l'enchainement catalytique. Le pourcentage HDN se calcule de la manière suivante : HDN (%) = (Nₛₒᵣₜᵢₑ - N_{entrée}) / N_{entrée}. Le pourcentage HDS se calcule de la manière suivante : HDS (%) = (Sₛₒᵣₜᵢₑ - S_{entrée}) / S_{entrée}. La stabilité se calcule de la manière suivante : (% HDN à 600h / % HDN à 300h).

Les résultats montrent clairement que l'enchaînement "catalyseur sous forme oxyde/catalyseur additivé" (exemples 3, 4 et 5) permet d'obtenir une activité catalytique en HDN plus élevée tout en maintenant une HDS élevée, et une stabilité plus élevée qu'un enchaînement catalyseurs additivés seuls (exemple 1) ou qu'un enchaînement "catalyseur sous forme d'oxyde" seuls (exemple 2).

**Tableau HDN, HDS et stabilité**

| *Exemple* | Chargement catalyseur(s) dans le réacteur (première zone/deuxième zone) | HDN (%) | HDS (%) | Stabilité |
|---|---|---|---|---|
| *1 comparatif* | 100% vol catalyseur B (NiMoP additivé) | 93 | 99.8 | 90 |
| *2 comparatif* | 100% vol catalyseur A (NiMoP calciné) | 84 | 99.8 | 90 |
| *3 selon l'invention* | 30% vol catalyseur A (NiMoP calciné) + 70% vol catalyseur B (NiMoP additivé) | 96 | 99.8 | 95 |
| *4 selon l'invention* | 30 % vol catalyseur A (NiMoP calciné) + 70 vol catalyseur C (NiMoP additivé) | 94 | 99.9 | 92 |
| *5 selon l'invention* | 70%vol catalyseur A (NiMoP calciné) + 30% vol catalyseur D (NiMoWP additivé) | 95 | 99.8 | 92 |

## Revendications

1. Procédé d'hydrotraitement d'une charge hydrocarbonée contenant des composés azotés à une teneur supérieure à 250 ppm poids et ayant une température moyenne pondérée supérieure à 380°C, comportant les étapes suivantes :
a) on met en contact en présence d'hydrogène ladite charge hydrocarbonée avec au moins un premier catalyseur comprenant un support amorphe à base d'alumine, du phosphore, et une phase active formée d'au moins un métal du groupe VIB sous forme oxyde et d'au moins un métal du groupe VIII sous forme oxyde, ledit premier catalyseur étant préparé selon un procédé comprenant au moins une étape de calcination,
b) on met en contact en présence d'hydrogène l'effluent obtenu à l'étape a) avec au moins un deuxième catalyseur comprenant un support amorphe à base d'alumine, du phosphore, une phase active formée d'au moins un métal du groupe VIB et d'au moins un métal du groupe VIII, et au moins un composé organique contenant de l'oxygène et/ou de l'azote, ledit deuxième catalyseur étant préparé selon un procédé comprenant les étapes suivantes :
i) on met en contact au moins un composant d'un métal du groupe VIB, au moins un composant d'un métal du groupe VIII, du phosphore et au moins un composé organique contenant de l'oxygène et/ou de l'azote avec le support, de manière à obtenir un précurseur de catalyseur,
ii) on sèche ledit précurseur de catalyseur issu de l'étape i) à une température inférieure à 200°C, sans le calciner utérieurement,
de manière à obtenir un effluent hydrotraité.

2. Procédé selon la revendication 1, dans lequel pour le catalyseur de l'étape a) ou b), le métal du groupe VIB est choisi parmi le molybdène, le tungstène et le mélange de ces deux éléments, et le métal du groupe VIII est choisi parmi le cobalt, le nickel et le mélange de ces deux éléments.

3. Procédé selon l'une des revendications 1 ou 2, dans lequel pour le catalyseur de l'étape a) ou b), la teneur en métal du groupe VIB est comprise entre 5 et 40% poids d'oxyde de métal du groupe VIB par rapport au poids total du catalyseur, la teneur en métal du groupe VIII est comprise entre 1 et 10% poids d'oxyde de métal du groupe VIII par rapport au poids total du catalyseur et la teneur en phosphore est comprise entre 0,1 et 10 % poids de P₂O₅ par rapport au poids total du catalyseur.

4. Procédé selon l'une des revendications 1 à 3, dans lequel le catalyseur de l'étape a) ou b) contient en outre au moins un dopant choisi parmi le bore et le fluor et un mélange de bore et de fluor.

5. Procédé selon l'une des revendications 1 à 4, dans lequel le composé organique est l'un ou plusieurs choisis parmi un acide carboxylique, un alcool, un aldéhyde, un ester, une amine, un acide carboxylique aminé, un alcool aminé, un nitrile ou un amide.

6. Procédé selon la revendication 5, dans lequel le composé organique est l'un ou plusieurs choisis parmi par l'éthylène glycol, le glycérol, le polyéthylène glycol (avec un poids moléculaire de 200 à 1500), l'acétophénone, le 2,4-pentanedione, le pentanole, l'acide acétique, l'acide maléique, l'acide oxalique, l'acide tartrique, l'acide formique, l'acide citrique et le succinate de dialkyle C1-C4.

7. Procédé selon la revendication 5, dans lequel le composé organique comprend au moins la combinaison du succinate de dialkyle C1-C4 et de l'acide acétique ou dans lequel le composé organique comprend au moins l'acide citrique.

8. Procédé selon l'une des revendications 1 à 7, dans lequel le catalyseur de l'étape a) ou b) a en outre subi une étape de sulfuration.

9. Procédé selon l'une des revendications 1 à 8, dans lequel la teneur en azote basique dans la charge est supérieure ou égale à 60 ppm.

10. Procédé selon l'une des revendications 1 à 9, dans lequel chacune des étapes a) et b) est effectuée à une température comprise entre 200 et 450°C, à une pression comprise entre 0,5 et 30 MPa, à une vitesse volumique horaire comprise entre 0,1 et 20 h⁻¹ et avec un rapport hydrogène/charge exprimé en volume d'hydrogène, mesuré dans les conditions normales de température et pression, par volume de charge liquide compris entre 50 l/l à 2000 l/l.

11. Procédé selon l'une des revendications 1 à 10, dans lequel l'étape a) est effectuée dans une première zone contenant le premier catalyseur qui occupe un volume V1, et l'étape b) est effectuée dans une deuxième zone contenant le deuxième catalyseur qui occupe un volume V2, la répartition des volumes V1/V2 étant comprise entre 10 % vol / 90% vol et 50% vol / 50% vol respectivement de la première et deuxième zone.

12. Procédé selon l'une des revendications 1 à 11, dans lequel l'étape i) de l'étape b) comprend les étapes successives suivantes:
i') on imprègne un support amorphe à base d'alumine par au moins une solution contenant au moins un métal du groupe VIB, au moins un métal du groupe VIII et ledit phosphore pour obtenir un support imprégné,
i") on sèche le support imprégné obtenu à l'étape i') à une température inférieure à 180°C sans calcination ultérieure pour obtenir unsupport imprégné séché,
i"') on imprègne le support imprégné séché obtenu à l'étape i") par une solution d'imprégnation comprenant au moins un composé organique contenant de l'oxygène et/ou de l'azote pour obtenir un précurseur catalytique imprégné,
i"") on laisse maturer le précurseur catalytique imprégné obtenu à l'étape i"') pour obtenir ledit précurseur de catalyseur.

13. Procédé selon l'une des revendications 1 à 12, dans lequel l'effluent obtenu à l'étape a) est soumis à une étape de séparation permettant de séparer une fraction lourde et une fraction légère contenant le H₂S et le NH₃ formés lors de l'étape a), ladite fraction lourde étant ensuite introduite dans l'étape b).

14. Procédé d'hydrocraquage mettant en oeuvre le procédé d'hydrotraitement selon les revendications 1 à 13, dans lequel on met en contact en présence d'hydrogène et dans les conditions opératoires d'hydrocraquage ledit effluent hydrotraité avec au moins un catalyseur d'hydrocraquage de manière à obtenir un effluent hydrocraqué.

15. Procédé de craquage catalytique en lit fluidisé mettant en oeuvre le procédé d'hydrotraitement selon les revendications 1 à 13, dans lequel on met en contact dans les conditions opératoires de craquage catalytique ledit effluent hydrotraité avec au moins un catalyseur de craquage catalytique de manière à obtenir un effluent craqué.

## Patentansprüche

1. Verfahren zur Hydrobehandlung einer Kohlenwasserstoffcharge, die Stickstoffverbindungen in einem Anteil von mehr als 150 Gew.-ppm enthält und eine gewichtete Durchschnittstemperatur im Bereich zwischen 250 und 380 °C aufweist, das die folgenden Schritte umfasst:
a) Inkontaktbringen, in Gegenwart von Wasserstoff, der Kohlenwasserstoffcharge mit mindestens einem ersten Katalysator, umfassend einen amorphen Träger, bestehend aus Aluminiumoxid, Phosphor und einer aktiven Phase, gebildet aus mindestens einem Metall der Gruppe VIB in Oxidform und mindestens einem Metall der Gruppe VIII in Oxidform, wobei der erste Katalysator gemäß einem Verfahren hergestellt wird, das mindestens einen Schritt zur Kalzinierung umfasst,
b) Inkontaktbringen, in Gegenwart von Wasserstoff, des in Schritt a) erhaltenen Abflusses mit mindestens einem zweiten Katalysator, umfassend einen amorphen Träger, bestehend aus Aluminiumoxid, Phosphor und einer aktiven Phase, gebildet aus mindestens einem Metall der Gruppe VIB und mindestens einem Metall der Gruppe VIII und mindestens einer organischen Verbindung, die Sauerstoff und/oder Stickstoff enthält, wobei der zweite Katalysator gemäß einem Verfahren hergestellt wird, das die folgenden Schritte umfasst:
i) Inkontaktbringen mindestens einer Komponente eines Metalls der Gruppe VIB, mindestens einer Komponente eines Metalls der Gruppe VIII, des Phosphors und mindestens einer organischen Verbindung, enthaltend Sauerstoff und/oder Stickstoff, mit dem Träger, um eine Katalysatorvorstufe zu erhalten,
ii) Trocknen der Katalysatorvorstufe aus Schritt i) bei einer Temperatur kleiner 200 °C, ohne ihn anschließend zu kalzinieren, um einen hydrobehandelten Abfluss zu erhalten.

2. Verfahren nach Anspruch 1, wobei für den Katalysator aus Schritt a) oder b) das Metall der Gruppe VIB aus Molybdän, Wolfram und dem Gemisch dieser beiden Elemente ausgewählt ist, und das Metall der Gruppe VIII aus Cobalt, Nickel und dem Gemisch dieser beiden Elemente ausgewählt ist.

3. Verfahren nach einem der Ansprüche 1 oder 2, wobei für den Katalysator aus Schritt a) oder b) der Anteil des Metalls der Gruppe VIB im Bereich zwischen 5 und 40 Gew.-% Metalloxid der Gruppe VIB bezogen auf das Gesamtgewicht des Katalysators liegt, der Anteil des Metalls der Gruppe VIII im Bereich zwischen 1 und 10 Gew.-% Metalloxid der Gruppe VIII bezogen auf das Gesamtgewicht des Katalysator liegt und der Phosphoranteil im Bereich zwischen 0,1 und 10 Gew.-% P₂O₅ bezogen auf das Gesamtgewicht des Katalysators liegt.

4. Verfahren nach einem der Ansprüche 1 bis 3, wobei der Katalysator aus Schritt a) oder b) ferner mindestens ein Dotierungsmittel, ausgewählt aus Bor und Fluor und einem Gemisch aus Bor und Fluor, enthält.

5. Verfahren nach einem der Ansprüche 1 bis 4, wobei die organische Verbindung eine oder mehrere, ausgewählt aus einer Carbonsäure, einem Alkohol, einem Aldehyd, einem Ester, einem Amin, einer Amino-Carbonsäure, einem Aminoalkohol, einem Nitril oder einem Amid, ist.

6. Verfahren nach Anspruch 5, wobei die organische Verbindung eine oder mehrere, ausgewählt aus Ethylenglycol, Glycerol, Polyethylenglycol (mit einer Molekülmasse von 200 bis 1.500), Acetophenon, 2,4-Pentandion, Pentanol, Essigsäure, Maleinsäure, Oxalsäure, Weinsäure, Ameisensäure, Citronensäure und C1-C4-Dialkylsuccinat, ist.

7. Verfahren nach Anspruch 5, wobei die organische Verbindung mindestens die Kombination aus C1-C4-Dialkylsuccinat und Essigsäure umfasst.

8. Verfahren nach einem der Ansprüche 1 bis 7, wobei der Katalysator aus Schritt a) oder b) ferner einem Schritt zur Sulfuration unterzogen wurde.

9. Verfahren nach einem der Ansprüche 1 bis 8, wobei der Anteil an basischem Stickstoff im Einsatz größer oder gleich 60 ppm ist.

10. Verfahren nach einem der Ansprüche 1 bis 9, wobei jeder der Schritte a) und b) bei einer Temperatur im Bereich zwischen 200 und 450 °C, bei einem Druck im Bereich zwischen 0,5 und 30 MPa, bei einer Raumgeschwindigkeit pro Stunde im Bereich zwischen 0,1 und 20 h⁻¹ und mit einem Wasserstoff/Einsatz-Verhältnis, ausgedrückt als Wasserstoffvolumen, gemessen unter normalen Temperatur- und Druckbedingungen, pro Volumen flüssiger Einsatz im Bereich zwischen 50 1/1 und 2.000 1/1, durchgeführt wird.

11. Verfahren nach einem der Ansprüche 1 bis 10, wobei der Schritt a) in einer ersten Zone, enthaltend den ersten Katalysator, der ein Volumen V1 einnimmt, durchgeführt wird, und Schritt b) in einer zweiten Zone, enthaltend den zweiten Katalysator, der ein Volumen V2 einnimmt, durchgeführt wird, wobei das Aufteilungsverhältnis der Volumina V1/V2 im Bereich zwischen 10 Vol.-%/90 Vol.-% bzw. 50 vol.-%/50 Vol.-% der ersten und der zweiten Zone liegt.

12. Verfahren nach einem der Ansprüche 1 bis 11, wobei Schritt i) aus Schritt b) die folgende Abfolge von Schritten umfasst:
i') Imprägnieren eines amorphen Trägers, bestehend aus Aluminiumoxid, mit mindestens einer Lösung, enthaltend mindestens ein Metall der Gruppe VIB, mindestens ein Metall der Gruppe VIII und den Phosphor, um einen imprägnierten Träger zu erhalten,
i") Trocknen des imprägnierten Trägers, der in Schritt i') erhalten wurde, bei einer Temperatur kleiner 180 °C ohne anschließende Kalzinierung, um einen getrockneten, imprägnierten Träger zu erhalten,
i'" Imprägnieren des getrockneten, imprägnierten Trägers, der in Schritt i") erhalten wurde, mit einer Imprägnierlösung, die mindestens eine organische Verbindung, enthaltend Sauerstoff und/oder Stickstoff, umfasst, um eine imprägnierte katalytische Vorstufe zu erhalten,
i"") Maturieren lassen der imprägnierten katalytischen Vorstufe, die in Schritt i") erhalten wurde, um die Katalysatorvorstufe zu erhalten.

13. Verfahren nach einem der Ansprüche 1 bis 12, wobei der in Schritt a) erhaltene Abfluss einem Schritt zur Trennung unterzogen wird, der es ermöglicht, eine schwere Fraktion und eine leichte Fraktion, enthaltend H₂S und NH₃, gebildet in Schritt a), zu trennen, wobei die schwere Fraktion anschließend in Schritt b) eingeführt wird.

14. Verfahren zum Hydrocracken, bei dem das Verfahren zur Hydrobehandlung nach den Ansprüchen 1 bis 13 eingesetzt wird, wobei in Gegenwart von Wasserstoff und unter den Arbeitsbedingungen des Hydrocrackings der hydrobehandelte Abfluss mit mindestens einem Hydrocracking-Katalysator in Kontakt gebracht wird, um einen hydrogecrackten Abfluss zu erhalten.

15. Verfahren zu katalytischen Cracken in der Wirbelschicht, bei dem das Verfahren zur Hydrobehandlung nach den Ansprüchen 1 bis 13 eingesetzt wird, wobei unter den Arbeitsbedingungen des katalytischen Crackens der hydrobehandelte Abfluss mit mindestens einem Katalysator zum katalytischen Cracken in Kontakt gebracht wird, um einen gecrackten Abfluss zu erhalten.

## Claims

1. A process for the hydrotreatment of a hydrocarbon feed containing nitrogen-containing compounds in an amount of more than 250 ppm by weight and having a weighted average temperature of more than 380°C, comprising the following steps:
a) bringing said hydrocarbon feed into contact, in the presence of hydrogen, with at least one first catalyst comprising an amorphous support based on alumina, phosphorus, and an active phase formed by at least one metal from group VIB in the oxide form and at least one metal from group VIII in the oxide form, said first catalyst being prepared in accordance with a process comprising at least one calcining step;
b) bringing the effluent obtained in step a) into contact, in the presence of hydrogen, with at least one second catalyst comprising an amorphous support based on alumina, phosphorus, an active phase formed by at least one metal from group VIB and at least one metal from group VIII, and at least one organic compound containing oxygen and/or nitrogen, said second catalyst being prepared in accordance with a process comprising the following steps:
i) bringing at least one component of a metal from group VIB, at least one component of a metal from group VIII, phosphorus and at least one organic compound containing oxygen and/or nitrogen into contact with the support, so as to obtain a catalyst precursor;
ii) drying said catalyst precursor obtained from step i) at a temperature of less than 200°C, without subsequent calcining;
in order to obtain a hydrotreated effluent.

2. The process according to claim 1 in which, for the catalyst of step a) or b), the metal from group VIB is selected from molybdenum, tungsten and a mixture of these two elements, and the metal from group VIII is selected from cobalt, nickel and a mixture of these two elements.

3. The process according to claim 1 or claim 2 in which, for the catalyst of step a) or b), the quantity of metal from group VIB is in the range 5% to 40% by weight of oxide of the metal from group VIB with respect to the total catalyst weight, the quantity of metal from group VIII is in the range 1% to 10% by weight of oxide of the metal from group VIII with respect to the total catalyst weight, and the quantity of phosphorus is in the range 0.1% to 10% by weight of P₂O₅ with respect to the total catalyst weight.

4. The process according to one of claims 1 to 3, in which the catalyst of step a) or b) further contains at least one dopant selected from boron and fluorine and a mixture of boron and fluorine.

5. The process according to one of claims 1 to 4, in which the organic compound is one or more compounds selected from a carboxylic acid, an alcohol, an aldehyde, an ester, an amine, an aminocarboxylic acid, an aminoalcohol, a nitrile and an amide.

6. The process according to claim 5, in which the organic compound is one or more compounds selected from ethylene glycol, glycerol, polyethylene glycol (with a molecular weight of 200 to 1500), acetophenone, 2,4-pentanedione, pentanole, acetic acid, maleic acid, oxalic acid, tartaric acid, formic acid, citric acid and C1-C4 dialkyl succinate.

7. The process according to claim 5, in which the organic compound comprises at least the combination of C1-C4 dialkyl succinate and acetic acid or in which the organic compound comprises at least citric acid.

8. The process according to one of claims 1 to 7, in which the catalyst of step a) or b) has also undergone a sulphurization step.

9. The process according to one of claims 1 to 8, in which the quantity of basic nitrogen in the feed is 60 ppm or more.

10. The process according to one of claims 1 to 9, in which each of steps a) and b) is carried out at a temperature in the range 200°C to 450°C, at a pressure in the range 0.5 to 30 MPa, at an hourly space velocity in the range 0.1 to 20 h⁻¹ and with a hydrogen/feed ratio, expressed as the volume of hydrogen measured under normal temperature and pressure conditions, per volume of liquid feed in the range 50 L/L to 2000 L/L.

11. The process according to one of claims 1 to 10, in which step a) is carried out in a first zone containing the first catalyst which occupies a volume V1, and step b) is carried out in a second zone containing the second catalyst which occupies a volume V2, the distribution of the volumes, V1/V2, being in the range 10% by volume/90% by volume to 50% by volume/50% by volume respectively for the first and second zone.

12. The process according to one of claims 1 to 11, in which step i) of step b) comprises the following steps in succession:
i') impregnating an amorphous support based on alumina with at least one solution containing at least one metal from group VIB, at least one metal from group VIII and said phosphorus in order to obtain an impregnated support;
i") drying the impregnated support obtained in step i') at a temperature of less than 180°C without subsequent calcining in order to obtain a dried impregnated support;
i"') impregnating the dried impregnated support obtained in step i") with an impregnation solution comprising at least one organic compound containing oxygen and/or nitrogen in order to obtain an impregnated catalytic precursor;
i"") allowing the impregnated catalytic precursor obtained in step i"') to mature, in order to obtain said catalyst precursor.

13. The process according to one of claims 1 to 12, in which the effluent obtained in step a) undergoes a separation step in order to separate a heavy fraction and a light fraction containing the H₂S and NH₃ formed during step a), said heavy fraction then being introduced into step b).

14. A hydrocracking process implementing the hydrotreatment process according to claims 1 to 13, in which said hydrotreated effluent is brought into contact, in the presence of hydrogen and under hydrocracking operating conditions, with at least one hydrocracking catalyst so as to obtain a hydrocracked effluent.

15. A fluid catalytic cracking process implementing the hydrotreatment process according to claims 1 to 13, in which said hydrotreated effluent is brought into contact, under catalytic cracking operating conditions, with at least one catalytic cracking catalyst so as to obtain a cracked effluent.
